# EUROPÄISCHE PATENTSCHRIFT

(11) **EP 1 697 631 B1**
(45) Veröffentlichungstag und Bekanntmachung des Hinweises auf die Patenterteilung: **12.12.2007**
(21) Anmeldenummer: 04786762.7
(22) Anmeldetag: 14.09.2004
(51) Int. Cl.: F02M 59/46, F16K 15/04, F16K 1/42, F04B 53/10

(54) **VENTIL, INSBESONDERE FÜR EINE HOCHDRUCKPUMPE EINER KRAFTSTOF FEINSPRITZEINRICHTUNG FÜR EINE BRENNKRAFTMASCHINE**
VALVE, IN PARTICULAR FOR A HIGH-PRESSURE PUMP OF A FUEL-INJECTION DEVICE FOR AN INTERNAL COMBUSTION ENGINE
SOUPAPE, NOTAMMENT POUR UNE POMPE A HAUTE PRESSION D'UN SYSTEME D'INJECTION DE CARBURANT POUR MOTEUR A COMBUSTION INTERNE

(30) Priorität: 25.11.2003 DE 10355030
(43) Veröffentlichungstag der Anmeldung: 06.09.2006
(73) Patentinhaber: ROBERT BOSCH GMBH, 70442 Stuttgart (DE)
(72) Erfinder: VAN DER LINDEN, Dietmar, 71546 Rietenau (DE); FUCHS, Walter, 70469 Stuttgart (DE); DUTT, Andreas, 70469 Stuttgart (DE); TUCHEL, Dieter, 71696 Moeglingen (DE)
(86) Internationale Anmeldenummer: PCT/DE2004/002041
(87) Internationale Veröffentlichungsnummer: WO 2005/052358

(56) Entgegenhaltungen:
- DE-A- 4 213 798
- DE-A- 10 345 154
- FR-A- 981 999
- US-A- 2 927 737
- US-A1- 2002 030 124

## Beschreibung

Die Erfindung geht aus von einem Ventil nach der Gattung des Anspruchs 1.

Ein solches Ventil ist durch die FR 981 999 A bekannt. Dieses Ventil weist ein Ventilglied auf, das mit einem in einem Gehäuseteil gebildeten Ventilsitz zusammenwirkt, um eine Verbindung zu steuern. Der Ventilsitz weist eine zumindest annähernd kegelförmige Sitzfläche auf, die an einem Übergang der Verbindung von einem Abschnitt mit kleinem Durchmesser zu einem Abschnitt mit großem Durchmesser angeordnet ist. An die Sitzfläche schließt sich an deren dem Abschnitt mit großem Durchmesser zugewandte Seite wenigstens eine Fläche an, die stärker zur Längsachse der Verbindung geneigt ist als die Sitzfläche, und an die Sitzfläche schließt sich an deren dem Abschnitt mit kleinem Durchmesser zugewandte Seite wenigstens eine Fläche an, die weniger stark zur Längsachse der Verbindung geneigt ist als die Sitzfläche. Diese Ausbildung ermöglicht eine einfache Herstellung der Sitzfläche, jedoch ist die Durchströmung des Ventils nicht optimal, so dass Strömungsverluste auftreten.

### Vorteile der Erfindung

Das erfindungsgemäße Ventil mit den Merkmalen gemäß den Alternativen nach Anspruch 1 hat demgegenüber den Vorteil, dass die Durchströmung verbessert ist und somit die Strömungsverluste verringert sind. Die erfindungsgemäße Hochdruckpumpe mit den Merkmalen gemäß Anspruch 4 hat den Vorteil, dass deren Funktion infolge der verbesserten Durchströmung von deren Einlass- und/oder Auslassventil verbessert ist.

### Zeichnung

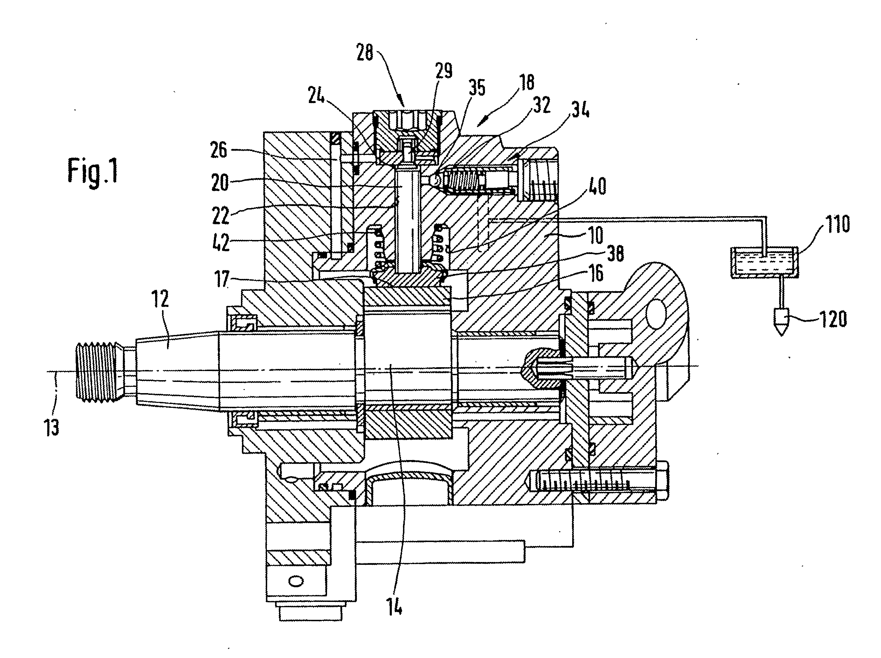

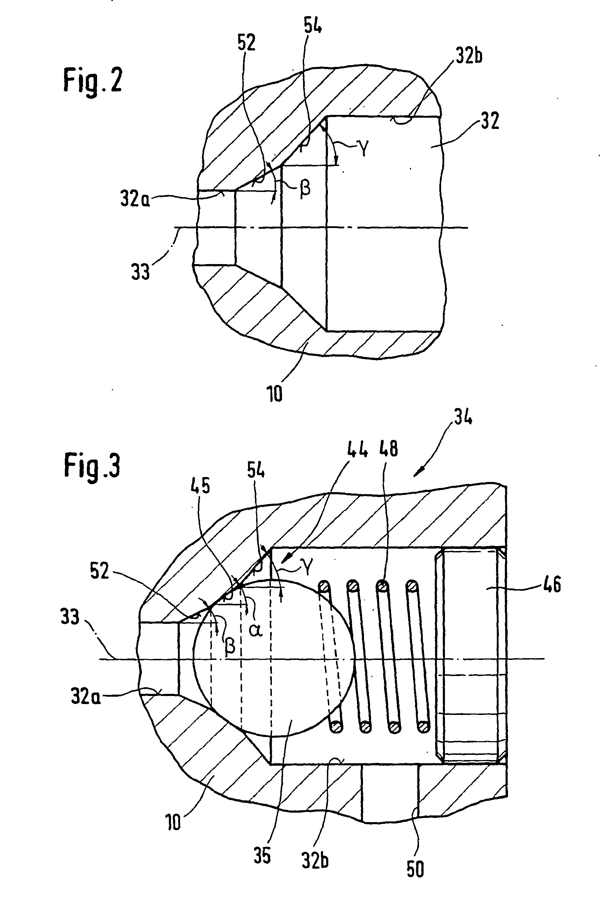

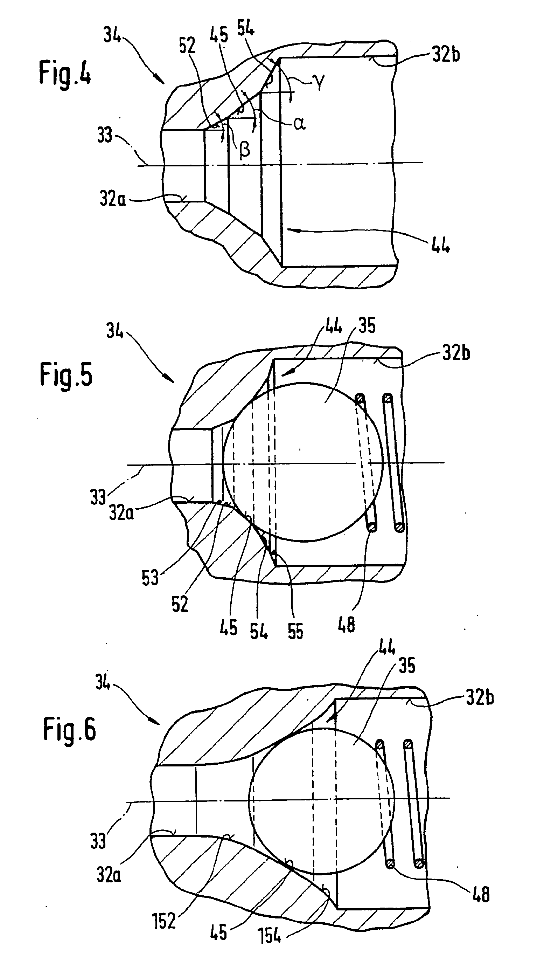

Mehrere Ausführungsformen gemäß dem stand der Technik sowie Ausführungsbeispiele der Erfindung sind in der Zeichnung dargestellt und in der nachfolgenden Beschreibung näher erläutert. Es zeigen Figur 1 eine Hochdruckpumpe für eine Kraftstoffeinspritzeinrichtung einer Brennkraftmaschine, Figur 2 ein Ventil der Hochdruckpumpe in vergrößerter Darstellung gemäß dem Stand der Technik in einem vorbearbeiteten Zustand, Figur 3 das Ventil von Figur 2 in einem fertigbearbeiteten Zustand, Figur 4 das Ventil gemäß dem Stand der Technik im vorbearbeiteten Zustand, Figur 5 das Ventil gemäß einem ersten Ausführungsbeispiel im fertigbearbeiteten Zustand und Figur 6 das Ventil gemäß einem zweiten Ausführungsbeispiel im fertigbearbeiteten Zustand.

### Beschreibung der Ausführungsbeispiele

In den Figuren 1 bis 6 ist eine Hochdruckpumpe für eine Kraftstoffeinspritzeinrichtung einer Brennkraftmaschine dargestellt. Die Hochdruckpumpe weist wie in Figur 1 dargestellt ein Gehäuse 10 auf, das mehrteilig ausgebildet ist und in dem eine Antriebswelle 12 angeordnet ist. Die Antriebswelle 12 ist im Gehäuse 10 drehbar gelagert und wird in nicht näher dargestellter Weise durch die Brennkraftmaschine rotierend angetrieben.

Die Antriebswelle 12 weist einen exzentrisch zu ihrer Drehachse 13 ausgebildeten Wellenabschnitt 14 auf, auf dem ein Übertragungselement 16 in Form eines Polygonrings drehbar gelagert ist. Die Hochdruckpumpe weist wenigstens ein, vorzugsweise mehrere im Gehäuse 10 angeordnete Pumpenelemente 18 mit jeweils einem Pumpenkolben 20 auf, der durch den Polygonring 16 in einer Hubbewegung in zumindest annähernd radialer Richtung zur Drehachse 13 der Antriebsewelle 12 angetrieben wird. Der Pumpenkolben 20 ist in einer Zylinderbohrung 22 im Gehäuse 10 oder einem Einsatz im Gehäuse 10 dicht verschiebbar geführt und begrenzt mit seiner dem Übertragungselement 16 abgewandten Stirnseite in der Zylinderbohrung 22 einen Pumpenarbeitsraum 24. Der Pumpenarbeitsraum 24 weist über einen im Gehäuse 10 verlaufenden Kraftstoffzulaufkanal 26 eine Verbindung mit einem Kraftstoffzulauf, beispielsweise einer Förderpumpe auf. An der Mündung des Kraftstoffzulaufkanals 26 in den Pumpenarbeitsraum 24 ist ein in den Pumpenarbeitsraum 24 öffnendes Einlassventil 28 angeordnet, das ein federbelastetes Ventilglied 29 aufweist. Der Pumpenarbeitsraum 24 weist ausserdem über einen im Gehäuse 10 verlaufenden Kraftstoffablaufkanal 32 eine Verbindung mit einem Auslass auf, der beispielsweise mit einem Speicher 110 verbunden ist. Mit dem Speicher 110 sind ein oder mehrere Injektoren 120 verbunden, durch die Kraftstoff an der Brennkraftmaschine eingespritzt wird. An der Mündung des Kraftstoffablaufkanals 32 in den Pumpenarbeitsraum 24 ist ein aus dem Pumpenarbeitsraum 24 öffnendes Auslassventil 34 angeordnet, das ebenfalls ein federbelastetes Ventilglied 35 aufweist.

Der Pumpenkolben 20 stützt sich über einen Stößel 38 an dem auf dem Wellenabschnitt 14 gelagerten Polygonring 16 ab. Der Stößel 38 ist hülsenförmig ausgebildet und liegt mit seinem geschlossenen Ende am Polygonring 16 an. Der Stößel 38 ist in einer Bohrung 40 im Gehäuse 10 der Hochdruckpumpe verschiebbar mit geringem Spiel geführt. Der Pumpenkolben 20 wird durch eine vorgespannte Rückstellfeder 42 mit seinem Kolbenfuss in Anlage an der Innenseite des Bodens des Stößels 38 gehalten und der Stößel 38 wird durch die Rückstellfeder 42 mit der Außenseite seines Bodens in Anlage am Polygonring 16 gehalten. Bei der Drehbewegung der Antriebswelle 12 wird der Polygonring 16 nicht mit dieser mitbewegt, führt jedoch aufgrund des Exzenterabschnitts 14 eine Bewegung senkrecht zur Drehachse 13 der Antriebswelle 12 aus, die die Hubbewegung des Pumpenkolbens 20 bewirkt. Der Polygonring 16 weist in seinem Außenmantel für jedes Pumpenelement 18 eine Abflachung 17 auf, an der der Stößel 38 anliegt. Beim Saughub des Pumpenkolbens 20, bei dem sich dieser radial nach innen bewegt, wird der Pumpenarbeitsraum 24 durch den Kraftstoffzulaufkanal 26 bei geöffnetem Einlassventil 28 mit Kraftstoff befüllt, wobei das Auslassventil 34 geschlossen ist. Beim Förderhub des Pumpenkolbens 20, bei dem sich dieser radial nach aussen bewegt, wird durch den Pumpenkolben 20 Kraftstoff unter Hochdruck durch den Kraftstoffablaufkanal 32 bei geöffnetem Auslassventil 34 zum Speicher 110 gefördert, wobei das Einlassventil 28 geschlossen ist.

In den Figuren 2 bis 6 ist jeweils ein Ventil der Hochdruckpumpe vergrößert dargestellt, das das Einlassventil 28 oder das Auslassventil 34 der Hochdruckpumpe sein kann. Nachfolgend wird das Ventil als Auslassventil 34 näher erläutert. Der Kraftstoffablauf 32 verläuft als Bohrung im Gehäuse 10 der Hochdruckpumpe, wobei die Bohrung einen in den Pumpenarbeitsraum 24 mündenden Bohrungsabschnitt 32a mit kleinem Durchmesser und einen an der Außenseite des Gehäuses 10 mundenden Bohrungsabschnitt 32b mit großem Durchmesser aufweist. Im Bohrungsabschnitt 32b ist das als Kugel ausgebildete Ventilglied 35 des Ventils 34 angeordnet. Der Durchmesser des Ventilglieds 35 ist kleiner als der Durchmesser des Bohrungsabschnitts 32b, jedoch größer als der Durchmesser des Bohrungsabschnitts 32a. Am Übergang zwischen den Bohrungsabschnitten 32a,32b ist ein ventilsitz 44 im Gehäuse 10 gebildet, mit dem das Ventilglied 35 zum Verschließen und Freigeben des Kraftstoffablaufs 32 aus dem Pumpenarbeitsraum 24 zusammenwirkt. Das Ventilglied 35 wird durch eine zwischen diesem und einem den Bohrungsabschnitt 32b nach außen verschließenden Verschlußelement 46 eingespannte Schließfeder 48 gegen den Ventilsitz 44 gepresst. Wenn der Druck im Pumpenarbeitsraum 24, der über den Bohrungsabschnitt 32a auf das Ventilglied 35 wirkt, auf das Ventilglied 35 eine größere Kraft erzeugt als die Schließfeder 48, so hebt das Ventilglied 35 vom Ventilsitz 44 ab und gibt den Kraftstoffablauf frei. In den Bohrungsabschnitt 32b mündet eine weitere Bohrung 50, die über eine Leitung mit dem Speicher 110 verbunden ist.

In den Figuren 2 und 3 ist ein gemäß dem Stand der Technik ausgebildetes Ventil 34 dargestellt. In Figur 2 ist das Gehäuse 10 der Hochdruckpumpe in einem vorbearbeiteten Zustand dargestellt, wobei der Ventilsitz 44 zwei unterschiedliche stark zur Längsachse 33 der Bohrungsabschnitte 32a,32b geneigte Flächen 52,54 aufweist, die jeweils zumindest annähernd kegelförmig ausgebildet sind. An den Bohrungsabschnitt 32b schließt sich zunächst die stark zur Längsachse 33 geneigte Fläche 52 an und an diese schließt sich zum Bohrungsabschnitt 32a hin die weniger stark zur Längsachse 33 geneigte Fläche 54 an. Die Bohrunggsabschnitte 32a,32b sowie die Flächen 52 und 54 werden durch spanabhebende Bearbeitung des Gehäuses 10 mittels Bohren und/oder Fräsen eingearbeitet. In diesem vorbearbeiteten Zustand wird das Gehäuse 10 gehärtet und anschließend wird mittels eines Schleif- und/oder Hon- und/oder Zerspanwerkzeugs am Übergang zwischen den Flächen 52,54 eine zumindest annähernd kegelförmige Sitzfläche 45 hergestellt, so dass sich der in Figur 3 dargestellte fertigbearbeitete Zustand ergibt. Zur Herstellung der Sitzfläche 45 ist nur ein in Richtung der Längsachse 33 kurzes Werkzeug erforderlich und es braucht nur ein geringer Materialabtrag am Gehäuse 10 zu erfolgen, so dass die gehärtete Oberflächenschicht des Gehäuses 10 erhalten bleibt. Die Sitzfläche 45 erhält durch die Schleif- und/oder Hon- und/oder Zerspanbearbeitung die erforderliche Rundheit bezüglich der Längsachse 33 und die erforderliche Oberflächenrauhigkeit, um eine sichere Abdichtung des Kraftstoffablaufs 32 bei an der Sitzfläche 45 anliegendem Ventilglied 35 zu erreichen. Die Sitzfläche 45 weist in Richtung der Längsachse 33 nur eine kurze Erstreckung auf. Die Sitzfläche 45 ist zur Längsachse 33 beispielsweise unter einem Winkel α von etwa 35° bis 45° geneigt, so dass sich ein Kegelwinkel zwischen etwa 70° und 90° ergibt. Die Fläche 52 ast unter einem Winkel β zur Längsachse 33 geneigt, der kleiner ist als der Winkel α und die Fläche 54 ist unter einem Winkel γ zur Längsachse 33 geneigt, der größer ist als der Winkel α. Zur Steuerung des Kraftstoffablaufs 32 wirkt das Ventilglied 35 mit der Sitzfläche 45 zusammen. Die Flächen 52,54 schließen sich beiderseits der Sitzfläche 45 an und bilden einen Ein- und Auslaufbereich für den abströmenden Kraftstoff.

In Figur 4 ist das Ventil 34 ebenfalls gemäß dem Stand der Technik dargestellt. Abweichend zur Ausführung gemäß Figur 2 und 3 ist dabei bereits im vorbearbeiteten Zustand gemäß Figur 4 die zumindest annähernd kegelförmige Sitzfläche 45 vorhanden, an die sich beiderseits die ebenfalls zumindest annähernd kegelförmigen Flächen 52,54 anschließen. Im vorbearbeiteten Zustand gemäß Figur 4 wird das Gehäuse 10 der Hochdruckpumpe gehärtet. Anschließend wird die Sitzfläche 45 mittels eines Schleif- und/oder Honwerkzeugs bearbeitet, so dass diese die erforderliche Form erhält. Die Sitzfläche 45 erhält durch die Schleif- und/oder Hon- und/oder Zerspanbearbeitung die erforderliche Rundheit bezüglich der Längsachse 33 und die erforderliche Oberflächenrauhigkeit, um eine sichere Abdichtung des Kraftstoffablaufs 32 bei an der Sitzfläche 45 anliegendem Ventilglied 35 zu erreichen.

In Figur 5 ist das Ventil 34 gemäß einem ersten Ausführungsbeispiel dargestellt, bei dem das Ventil 34 ausgehend vom stand der Technik derart ausgebildet ist, dass sich an die sich an die Sitzfläche 45 anschließende Fläche 52 und/oder an die Fläche 54 jeweils wenigstens eine weitere zumindest annähernd kegelförmige Fläche 53 bzw. 55 anschließt. Die an die Fläche 54 auf deren der Sitzfläche 45 abgewandter Seite anschließende Fläche 55 ist dabei stärker zur Längsachse 33 geneigt als die Fläche 54. Die an die Fläche 52 auf deren der Sitzfläche 45 abgewandter Seite anschließende Fläche 53 ist dabei weniger stark zur Längsachse 33 geneigt als die Fläche 52. An die Flächen 53,55 können sich weitere Flächen anschließen, wobei die sich an die Fläche 55 anschließenden Flächen zunehmend stärker zur Längsachse 33 geneigt sind und die sich an die Fläche 53 anschließenden Flächen zunehmend weniger stark zur Längsachse 33 geneigt sind.

In Figur 6 ist das Ventil 34 gemäß einem zweiten Ausführungsbeispiel dargestellt, bei dem sich an die Sitzfläche 45 beiderseits jeweils konvex zur Längsachse 33 hin gewölbte Flächen 152 und 154 anschließen. Die Neigung der Fläche 154 zur Längsachse 33 nimmt dabei mit zunehmendem Abstand von der Sitzfläche 45 in Richtung der Längsachse 33 zu, während die Neigung der Fläche 152 mit zunehmendem Abstand von der Sitzfläche 45 in Richtung der Längsachse 33 abnimmt. Insgesamt ergibt sich somit ein trompetentrichterförmiger Verlauf des Übergangs vom Bohrungsabschnitt 32a zum Bohrungsabschnitt 32b in dem die zumindest annähernd kegelförmige Sitzfläche 45 angeordnet ist. Im vorbearbeiteten Zustand schließen die beiden Flächen 152 und 154 kontinuerlich aneinander an und die zumindest annähernd kegelförmige Sitzfläche 45 wird anschließend wie beim vorstehend erläuterten Stand der Technik durch Bearbeitung mittels eines Schleif- und/oder Hon- und/oder Zerspanwerkzeugs erzeugt. Die Sitzfläche 45 erhält durch die Schleif- und/oder Hon- und/oder Zerspanbearbeitung die erforderliche Rundheit bezüglich der Längsachse 33 und die erforderliche Oberflächenrauhigkeit, um eine sichere Abdichtung des Kraftstoffablaufs 32 bei an der Sitzfläche 45 anliegendem Ventilglied 35 zu erreichen. Bei dieser trompetentrichterförmigen Ausbildung der Flächen 152 und 154 wird eine besonders günstige Durchströmung des Kraftstoffablaufs 32 mit geringen Strömungsverlusten erreicht.

## Patentansprüche

1. Ventil, insbesondere für eine Hochdruckpumpe einer Kraftstoffeinspritzeinrichtung für eine Brennkraftmaschine, mit einem Ventilglied (35), das mit einem in einem Gehäuseteil (10) gebildeten Ventilsitz (44) zusammenwirkt, um eine Verbindung (32) zu steuern, wobei der Ventilsitz (44) eine zumindest annähernd kegelförmige Sitzfläche (45) aufweist, die an einem Übergang der Verbindung (32) von einem Abschnitt (32a) mit kleinem Durchmesser zu einem Abschnitt (32b) mit großem Durchmesser angeordnet ist, wobei sich an die Sitzfläche (45) an deren dem Abschnitt (32b) mit großem Durchmesser zugewandte Seite wenigstens eine Fläche (54) anschließt, die stärker zur Längsachse (33) der Verbindung (32) geneigt ist als die Sitzfläche (45), und wobei sich an die Sitzfläche (45) an deren dem Abschnitt (32a) mit kleinem Durchmesser zugewandte Seite wenigstens eine Fläche (52) anschließt, die weniger stark zur Längsachse (33) der Verbindung (32) geneigt ist als die Sitzfläche (45), **dadurch gekennzeichnet, dass** sich an die zum Abschnitt (32b) der Verbindung (32) mit großem Durchmesser hin an die Sitzfläche (45) anschließende Fläche (54) wenigstens eine weitere, stärker zur Längsachse (33) der Verbindung (32) geneigte Fläche (55) anschließt und/oder sich an die zum Abschnitt (32a) der Verbindung (32) mit kleinem Durchmesser hin an die Sitzfläche (45) anschließende Fläche (52) wenigstens eine weitere, weniger stark zur Längsachse (33) der Verbindung (32) geneigte Fläche (53) anschließt, oder alternativ dazu, dass die sich an die Sitzfläche (45) anschließenden Flächen (152,154) zur Längsachse (33) der Verbindung (32) hin konvex gewölbt ausgebildet sind.

2. Ventil nach Anspruch 1, **dadurch gekennzeichnet, dass** die Sitzfläche (45) von der Seite des Abschnitts (32b) der Verbindung (32) mit großem Durchmesser her bearbeitet ist, insbesondere durch Schleifen und/oder Honen und/oder Zerspanen.

3. Ventil nach einem der vorstehenden Ansprüche, **dadurch gekennzeichnet, dass** das Gehäuseteil (10) zumindest im Bereich der Sitzfläche (45) gehärtet ist.

4. Hochdruckpumpe, insbesondere für eine Kraftstoffeinspritzeinrichtung einer Brennkraftmaschine, mit einem Pumpengehäuse (10), in dem wenigstens ein Pumpenelement (18) angeordnet ist, das einen durch eine Antriebswelle (12) in einer Hubbewegung angetriebenen Pumpenkolben (20) aufweist, der einen Pumpenarbeitsraum (24) begrenzt, der über ein Einlassventil (28) mit einem Zulauf (26) und über ein Auslassventil (34) mit einem Ablauf (32) verbindbar ist, **dadurch gekennzeichnet, dass** das Einlassventil (28) und/oder das Auslassventil (34) gemäß einem der vorstehenden Ansprüche ausgebildet ist.

## Claims

1. Valve, in particular for a high-pressure pump of a fuel injection device for an internal combustion engine, with a valve member (35) which cooperates with a valve seat (44) formed in a housing part (10), in order to control a connection (32), the valve seat (44) having an at least approximately conical seat surface (45) which is arranged at a transition of the connection (32) from a portion (32a) of small diameter to a portion (32b) of large diameter, the seat surface (45) having adjoining it, on its side facing the portion (32b) of large diameter, at least one surface (54) which is inclined to the longitudinal axis (33) of the connection (32) to a greater extent than the seat surface (45), and the seat surface (45) having adjoining it, on its side facing the portion (32a) of small diameter, at least one surface (52) which is inclined to the longitudinal axis (33) of the connection (32) to a lesser extent than the seat surface (45), **characterized in that** at least one further surface (55) inclined to the longitudinal axis (33) of the connection (32) to a greater extent adjoins the surface (54) adjoining the seat surface (45) towards the portion (32b) of large diameter of the connection (32) and/or at least one further surface (53) inclined to the longitudinal axis (33) of the connection (32) to a lesser extent adjoins the surface (52) adjoining the seat surface (45) towards the portion (32a) of small diameter of the connection (32), or, alternatively to this, **in that** the surfaces (152, 154) adjoining the seat surface (45) are designed so as to be curved convexly towards the longitudinal axis (33) of the connection (32).

2. Valve according to Claim 1, **characterized in that** the seat surface (45) is machined from the side of the portion (32b) of large diameter of the connection (32), in particular by grinding and/or honing and/or cutting.

3. Valve according to one of the preceding claims, **characterized in that** the housing part (10) is hardened at least in the region of the seat surface (45).

4. High-pressure pump, in particular for a fuel injection device of an internal combustion engine, with a pump housing (10) in which is arranged at least one pump element (18) which has a pump piston (20) which is driven in a lifting movement by a driveshaft (12) and delimits a pump working space (24) which is connectable to an inflow (26) via an inlet valve (28) and to an outflow (32) via an outlet valve (34), **characterized in that** the inlet valve (28) and/or the outlet valve (34) are/is designed according to one of the preceding claims.

## Revendications

1. Soupape notamment pour une pompe haute pression d'une installation d'injection de carburant d'un moteur à combustion interne comportant un organe de soupape 35 coopérant avec un siège de soupape 44 réalisé dans une partie de boîtier 10 pour commander une liaison 32,
le siège de soupape 44 ayant une surface de siège 45 au moins sensiblement conique, à la jonction de la liaison 32 entre un segment 32a de petit diamètre et un segment 32b de grand diamètre,
au moins une surface 54 étant adjacente à la surface de siège 45 a son côté tourné vers le segment 32b de grand diamètre, cette surface 54 étant inclinée plus fortement par rapport à l'axe longitudinal 33 de la liaison 32 que la surface de siège 45 et
au moins une surface 52 moins fortement inclinée par rapport à l'axe longitudinal 33 de la liaison 32 faisant suite à la surface de siège 45 tournée vers le segment 32a de petit diamètre,
**caractérisée en ce que**
la surface 54 adjacente au segment 32b de grand diamètre de la liaison 32, faisant suite à la surface de siège 45, se poursuit par au moins une autre surface 55 plus fortement inclinée par rapport à l'axe longitudinal 33 de la liaison 32 et/ou la surface 52 adjacente à la surface de siège 45, du côté du segment 32a de petit diamètre de la liaison 32, se poursuit par au moins une autre surface 53 inclinée moins fortement par rapport à l'axe longitudinal 33 de la liaison 32 ou alternativement les surfaces 152, 154 adjacentes à la surface de siège 45 ont une courbure convexe par rapport à l'axe longitudinal 33 de la liaison 32.

2. Soupape selon la revendication 1,
**caractérisée en ce que**
la surface de siège 45 est usinée à partir du côté du segment 32b de grand diamètre de la liaison 32 notamment par meulage et/ou honage et/ou enlèvement de copeaux.

3. Soupape selon l'une des revendications précédentes,
**caractérisée en ce que**
la partie de boîtier 10 est durcie au moins dans la zone de la surface de siège 45.

4. Pompe à haute pression notamment pour une installation d'injection de carburant d'un moteur à combustion interne comportant un boîtier de pompe 10 logeant au moins un élément de pompe 18 ayant un piston de pompe 20 entraîné par un arbre d'entrainement 12 suivant un mouvement de translation, le piston délimitant une chambre de travail de pompe 24, reliée par une soupape d'admission 28 à l'arrivée 26 et par une soupape d'échappement 34 à la sortie 32,
**caractérisée en ce que**
la soupape d'entrée 28 et/ou la soupape de sortie 34 sont réalisées selon l'une des revendications précédentes.
